# EUROPÄISCHE PATENTSCHRIFT

(11) **EP 0 946 924 B1**
(45) Veröffentlichungstag und Bekanntmachung des Hinweises auf die Patenterteilung: **26.09.2001**
(21) Anmeldenummer: 97952808.0
(22) Anmeldetag: 26.11.1997
(51) Int. Cl.: G06K 9/20, H04N 1/32, H04N 1/00

(54) **FEHLERTOLERANTES IMAGE-COMPUTERTERMINAL**
ERROR-TOLERANT IMAGE COMPUTER TERMINAL
TERMINAL INFORMATIQUE-IMAGE A TOLERANCE D'ERREUR

(30) Priorität: 17.12.1996 AT 734966
(43) Veröffentlichungstag der Anmeldung: 06.10.1999
(73) Patentinhaber: Fendt, Johann, 1110 Wien (AT)
(72) Erfinder: Fendt, Johann, 1110 Wien (AT)
(74) Vertreter: Fritsche, Rainer, Dipl.-Wirtsch.-Ing.
(86) Internationale Anmeldenummer: EP9706600
(87) Internationale Veröffentlichungsnummer: WO9829827

(56) Entgegenhaltungen:
- EP-A- 0 557 886
- WO-A-96/24907
- DE-A- 4 307 577
- US-A- 4 566 127
- PATENT ABSTRACTS OF JAPAN vol. 008, no. 239 (E-276), 2.November 1984 & JP 59 117368 A (RICOH KK), 6.Juli 1984,
- PATENT ABSTRACTS OF JAPAN vol. 007, no. 251 (E-209), 8.November 1983 & JP 58 138165 A (FUJI XEROX KK), 16.August 1983,

## Beschreibung

Die Erfindung besteht aus einem Terminal, das in der Art der heute gebräuchlichen Faxgeräte Image-Informationen einliest, die Umwandlung in Codes über eine OCR-Einheit vornimmt, das Ergebnis dieser Umwandlung dem Benutzer des Terminals sofort anzeigt und es ihm damit ermöglicht, bei Feststellung einer unrichtigen Umwandlung seiner Schriftinformationen in Codes entweder den Eingabevorgang zu wiederholen oder aber auch einen nicht richtigen Input an die Zieladresse derart zu übersenden, daß er den Empfänger über die Fehlerhaftigkeit der Umwandlung informiert, um eine manuelle Nachbearbeitung zu ermöglichen.

Anders als die heute noch überwiegende Eingabe von Befehlen oder Informationen an Rechneranlagen auf dem Wege über alphanumerische Tastatur und Bildschirm können solche Eingaben auch über schriftliche, namentlich handschriftliche Eintragungen, auf Papier vorgenommen werden. Die den Vorgang der Umwandlung von Schrift in Codes durchführende Software wird unter der Bezeichnung OCR (optical character recognition) zusammengefaßt. Sie bezeichnet eine gut dokumentierte Disziplin, die Verfahren und Techniken, Methoden (Merkmalserkennung, Mustererkennung), fehlertolerante Interpolationsverfahren (Fuzzy-Logik) und technische Aspekte der Datenkompression, der Optimierung der Durchführungszeiten etc. umfaßt.

Die Technik der OCR stößt jedoch an natürliche Grenzen, die völlig fehlerfreie Ergebnisse ausschließan: menschliche Handschrift weist einerseits personenindividuelle Schriftbilder auf und ist andererseits auch bei derselben Person im Zeitverlauf nicht immer unverändert.

Dies stellt für die Verwendung von Handschrift als Eingabeinstrument ein schwerwiegendes Hindernis dar: auch sehr geringe Fehlerquoten, die niemals ganz auszuschließen sein werden, verunmöglichten bisher einen praktikablen Einsatz solcher Terminals. Diese hätten sich sonst in vielen Fällen, vor allem im Bereich einfacher alltäglicher Anwendungen, wie sie z.B. im Selbstbedienungsbereich von Banken vorkommen, schon längst stärker gegen die Instrumente "Tastatur und Bildschirm" durchgesetzt. Der psychologische Vorteil des Schrift-Input liegt auch darin, daß das Eingabemedium, also das Formular, im Original als physischer Beleg und Dokumentation dessen, was dem Eingabegerät als Befehl übermittelt wurde, in Händen des Benutzers verbleibt.

Zur Darstellung des bisherigen Standes der Technik, soweit er für das Verständnis der Erfindung als nützlich anzusehen ist, ist ein Kurzabriß der Entwicklung der Eingabeperipherien zu geben. Die Siebzigerjahre standen im Zeichen der Großrechner, denen über "unintelligente" Terminals Inputs bzw. Befehle übermittelt wurden. In den Achtzigerjahren trat der Personal-Computer seinen Siegeszug an, ein Gerät von hoher dezentraler Intelligenz, das auch sehr bald als dezentrales Peripheriegerät eingesetzt wurde und die anderen Terminals weitgehend verdrängte.

Gerade bei dieser Funktion aber, die zunehmend an Bedeutung gewann, zeigten sich die Schwächen und Probleme des PC. Nur zur Übermittlung einfacher Inputs und Befehle an Zentralrechner (Hosts, Server) ist der PC im Grunde sowohl zu kompliziert als auch zu teuer. Dabei spielen nicht nur die Anschaffungskosten, sondern mehr noch die Wartungskosten und auch die durch rasche System- und Produktzyklen hohe Obsoleszenz eine Rolle. Diese Erkenntnisse haben etwa ab dem Jahre 1995 zur Entwicklung von "lean clients" geführt. Es ist zu erwarten, daß sich diese aus Kostengründen besonders bei einfachen Anwendungen durchsetzen werden. Anwender sind nämlich entweder nicht immer in der Lage oder nicht immer bereit, hohe Anforderungen hinsichtlich Bedienungs-know-how zu erfüllen. Bei alltäglichen Vorgängen im Bereich der Selbstbedienung wie auch der Informationszugriffe, etwa über das Internet, werden sich auf Dauer einfache Verfahren mit leichter Verständlichkeit, simpler Handhabung und rascher Abwicklung durchsetzen. Auch Benutzer, die kompliziertere Bedienungsvorgänge, etwa an einem PC, gewohnt sind, werden der einfacheren Technik den Vorzug geben, wenn der schlichte Nutzen der Anwendung im Vordergrund steht und nicht die dem PC auch innewohnende spielerische Komponente der Bedienung, wenn also eine realistische Abwägung von Aufwand und Nutzen stattfindet.

Diese Erfahrungen und Erkenntnisse führten in den letzten Jahren zu zwei evolutinären Entwicklungen. Erstens zur symbolorientierten, graphischen Benutzeroberfläche samt Erweiterung der Tastatur durch Mausbedienung - inzwischen nahezu monopolartige Domäne der Firma Microsoft. Zweitens zur Entwicklung von sogenannten "lean clients" als einfacherer und vor allem kostengünstigerer Alternative zu immer kapazitätsstärkeren dezentralen Rechnern, also zu PC.

Heute stehen im strategisch entscheidenden Bereich der Informatik, der Mensch-Maschine-Schnittstelle revolutionäre Entwicklungen vor der Tür, nämlich die Kommunikation des Menschen mit der Maschine auf dem Wege über die Sprache als auch über die Handschrift. Weltweit werden große Anstrengungen unternommen, um auf diesem Gebiet Fortschritte zu erzielen - wird doch ein möglichst anwendernahes Schnittstellendesign einen Quantensprung in vielen Anwendungsbereichen bewirken.

Sprach- und Schriftinput können als gleichwertige Verfahren angesehen werden-wenn auch mit jeweils unterschiedlichen Vor- und Nachteilen und damit mit eher komplementären Anwendungsbereichen. Bezüglich der Präferenzen für die beiden Methoden gibt es einen markanten Unterschied: während in der europäischen und amerikanischen Forschung und Entwicklung ausschließlich von "Spracheingabe" die Rede ist, setzt die japanische Elektro- und Elektronikindustrie vorwiegend auf die "Schrifteingabetechnik". Darin kommen kulturelle Unterschiede zum Ausdruck. Während im Westen eine hohe Affinität zum abstrakten Denken vorherrscht, das sich dem virtuellen Raum zuwendet, ist das japanische Denken konkreter und praxisorientierter, theorieferner. Bedeutende wirtschaftliche Konsequenz davon war der Umstand, daß das Faxgerät in Europa entwickelt, aber in Japan aufgegriffen und von dort zu einem weltweiten Markterfolg gemacht wurde.

So gut wie alle bekannten Patente auf dem Gebiet der Schriftverarbeitung sind japanisch, und zwar schon seit vielen Jahren, ab Einsatz des Faxgerätes. Diese japanische Dominanz, dieser Entwicklungsvorsprung konnte auch ein Grund sein, daß sich die westliche Forschung auf das Gebiet der Sprache zurückzog und "Schrifterkennung" dort kein Thema ist. Umgekehrt ist dies nicht der Fall. Es gibt weit fortgeschrittene japanische Forschung und Entwicklung auf dem Gebiet "Spracherkennung", und aus einem Grund ist auch damit zu rechnen, daß diese Technik zuerst in Japan angewandt werden wird: die japanische Sprache ist von ihrer Struktur und Akustik her um ein vielfaches einfacher maschinell erfaßbar als westliche Sprachen.

Die jüngste Entwicklungstendenz zu "lean clients" in Kombination mit Handschriftverarbeitung hat die japanische Forschung und Entwicklung auf eine Technik und ein Gerät gelenkt, das interessante Anwendungsmöglichkeiten erschließen würde: das bekannte Faxgerät, ungenutzt in seiner potentiellen Funktion als "schlankes" Input-Peripheriegerät, das Schrift und damit potentielle Steuerbefehle oder Inputinformationen transportiert. Die Schrift kann dabei entweder am Sendeort oder am Zielort mittels OCR in Codes umgewandelt werden. Verlegt man die Umwandlung in das Zielsystem, könnten alle heutige Faxgeräte weltweit die Funktion von Terminals übernehmen und damit eine Rolle neben PCs oder neuen, aber doch konventionellen Peripheriegeräten wie Netzcomputer spielen.

Der größte japanische Elektrokonzern, die Firma Hitachi, experimentiert seit langem mit Mainframes, die Schriftinput von normalen Faxgeräten verarbeiten sollen und damit jedes Faxgerät zu einem "Rückantwort-Faxgerät" machen würden. Hindernis für eine Verwertung der Lizenzen dürfte aber die Erfahrung gewesen sein, daß die Fehlerhaftigkeit der OCR-Umwandlung einer Einsatztauglichkeitentgegensteht. .Von westlichen Herstellern erzeugte Prototypen mit der Möglichkeit der Korrektur von Restfehlern über Tastatur und Bildschirm andererseits leiden darunter, daß damit wieder ein Rückfall auf eine niedrigere Stufe der Eingabeperipherie und somit eine eingeschränkte Benutzerakzeptanz gegeben ist.
Ein weiteres Verfahren der Firma Matsushita integriert die Korrekturtastatur für die OCR-Umwandlung in das Faxgerät, aber auch dies stellt im Grunde keinen wesentlichen Fortschritt gegenüber einer reinen Tastatur (und Bildschirm-) Eingabe dar.

Die erfinderische Weiterentwicklung des nunmehrigen Systems besteht in einer Kombination einer - scheinbar - schwierigen Voraussetzung für ein qualitativ zufriedenstellendes OCR-Verfahren einerseits und einer organisatorischen Innovation andererseits, die durch eine technische Anordnung ermöglicht wird. Beides wird im folgenden beschrieben.

Jeder, der OCR-Software benutzt, weiß, daß einigermaßen zufriedenstellende Ergebnisse erst erzielbar sind. wenn dem OCR-Verfahren das individuelle Handschriftenmuster des Benutzers zugrunde gelegt wird. Der Benutzer muß die Software erst initialisieren, indem er ihr sein individuelles Schriftbild antrainiert. Im Bereich der Spracherkennung ist diese Überlegung Hauptinhalt der Forschung: das akustische Training des Systems mit der individuellen Sprechweise des Anwenders ist für eine erfolgreiche Verwendung von größter Wichtigkeit.

Auch bei der Schriftverarbeitung muß dem System daher das individuelle Handschriftenmuster bekanntgegeben werden. Meist wird es also notwendig sein, jeden Benutzer ein Musterformular handschriftlich ausfüllen zu lassen, um für das OCR-Programm im Anwendungsfall dieses personenindividuelle Muster zugrundelegen zu können, In manchen Anwendungsbereichen wird man aber dieses Handschriftenmuster aus einer großen Zahl von Schriftanwendungen eines Benutzers ableiten und für ihn abspeichern können - z.B. bei Bank-Überweisungen.

Das Aufrufen des kundenspezifischen Schriftbildes im Anwendungsfall kann über eine Magnet- oder Chipkarte erfolgen, sei es, daß darauf das Schriftmuster selbst gespeichert ist, sei es, daß mit einer Identifikationsnummer das Schriftmuster im Speicher der Systemhardware aufgerufen wird. Letzteres kann auch über die auf dem Formular aufgedruckte Kontonummer, die als erste OCR- übersetzt wird, durchgeführt werden. Diese zweite Variante stellte auch die einzige dem Hitachi-System zugängliche Möglichkeit für eine Qualitätsverbesserung dar.

Die weitere technisch-organisatorische Innovation des gegenständlichen Verfahrens besteht darin, daß dem Anwender keine obligatorische Korrektur einer allfällig fehlerhaften Eingabe abverlangt wird. Ein zweiter Arbeitsschritt, nämlich eine Korrektur der Eingabe, in welcher Form auch immer, kann entfallen, wodurch die Akzeptanz sicherlich wesentlich erhöht werden kann. Der Benutzer ist nur gehalten, den Ausdruck der OCR-Übersetzung seines Handschriftformulars zu überprüfen. Im positiven Fall wird er den Knopf "OK - Durchführen" drücken; stellt er hingegen eine fehlerhafte Übersetzung auf dem ausgedruckten Beleg fest, wird er den anderen Knopf "Fehlerhaft - Durchführen nach manueller Korrektur durch Sytembetreiber" drücken. In diesem Fall wird eine Bestätigung ausgedruckt, daß die als fehlerhaft deklarierte Eingabe im System noch nachbearbeitet wird. Dieser zweite Schritt der gegenständlichen Erfindung könnte zwar auch ohne den ersten Schritt des Aufrufs des kundenindividuellen Schriftmusters durchgeführt werden, zu befürchten ist aber dann eine sowohl für den Kunden als auch für den Systembetreiber unbefriedigende Trefferquote.

Die Weiterverarbeitung fehlerhafter und vom Anwender nicht korrigierter Eingaben erfolgt dann analog der heutigen durch manuelle Eingabe bzw. Nachbearbeitung, diese jedoch hier gestützt durch die vom System schon geleistete Vorarbeit: dem menschlichen Bearbeiter liegt die überwiegend wohl richtige Übersetzung bereits vor, der Fehler wird durch Vergleich mit dem Original rasch entdeckt und korrigiert werden können.

Die Herstellung der für die Verarbeitung erforderlichen Fehlerfreiheit ist in diesem Verfahren also nicht zwingend Sache des Anwenders. Dies ist für die Akzeptanz überall dort wichtig, wo kein Motiv für besondere Sorgfalt oder Aufwand des Benutzers besteht. In welchen Branchen und bei welchen Anwendungsfällen es möglich sein wird, dem Anwender neben dem reinen Prüf-Aufwand, den er wohl noch bereitwillig erbringen wird, auch einen Korrektur-Aufwand abzuverlangen und ob und wie dieser zu stimulieren ist (etwa über Gebührendifferenzierungen), ist eine Frage der Anbieter-Kunde-Relation, der Konkurrenzsituation und des Marketing.

## Patentansprüche

1. Faxgerät zum Senden und Empfangen von zumindest teilweise handschriftliche Bestandteile aufweisenden Dokumenten, enthaltend eine Abtasteinheit zum Abtasten der Bildinformation eines zu übermittelnden Dokumentes, eine OCR-Einheit zum Umwandeln der abgetasteten Bildinformation in Codes, eine Sendeeinheit zum Senden der durch die OCR-Einheit umgewandelten Codes, eine Empfangseinheit zum Empfangen von übermittelten Dokumenten sowie eine Druckeinheit zum Ausdrucken von Dokumenten,
**dadurch gekennzeichnet, daß** eine Schriftbild-Eingabe- und Speichereinheit zum Eingeben von benutzerindividuellen Schriftbildern sowie zum Abspeichern der benutzerindividuellen Schriftbilder in geeigneter Form vorgesehen ist, daß eine Aufrufeinheit zum benutzerindividuellen Aufrufen eines in der Schriftbild-Eingabe- und Speichereinheit benutzerindividuellen Schriftbildes vorgesehen ist, daß weiterhin ein Zwischenspeicher vorhanden ist, der die von der OCR-Einheit auf Basis des abgespeicherten benutzerindividuellen Schriftbildes abgespeicherten, umgewandelten Codes speichert, daß zwischen der OCR-Einheit und der Druckeinheit eine Datenübertragungsverbindung vorhanden ist. so daß die durch die OCR-Einheit wieder in eine Bildinformation rückumgewandelten Codes unmittelbar nach deren Erstellung und Rückumwandlung mittels der Druckeinheit ausgedruckt werden können, und daß eine Löscheinheit zum Löschen der in dem Zwischenspeicher abgespeicherten Codes sowie eine Bestätigungseinheit vorgesehen ist, mit der die in dem Zwischenspeicher abgespeicherten Codes für eine Übersendung mittels der Sendeeinheit aus dem Zwischenspeicher abrufbar sind.

2. Faxgerät nach Anspruch 1,
**dadurch gekennzeichnet, daß** die Aufrufeinheit durch eine Kartenleseeinheit zum Lesen von Magnet- oder Chipkarten gebildet ist.

3. Faxgerät nach Anspruch 1 oder 2,
**dadurch gekennzeichnet, daß** eine Anzeigeeinrichtung zum Anzeigen der durch die Vergleichs- und Korrektureinheit verarbeiteten und durch die OCR-Einheit wieder in Bildinformationen rückumgewandelten Codes unmittelbar nach deren Erstellen vorgesehen ist.

4. Verfahren zum Übertragen von zumindest teilweise handschriftliche Bestandteile aufweisenden Dokumenten mittels Faxgeräten, bei dem das Dokument mittels einer Abtasteinheit abgetastet und die abgetastete Bildinformation mittels einer OCR-Einheit in Codes umgewandelt wird, bei dem mittels einer Sendeeinheit der durch die OCR-Einheit umgewandelten Codes gesendet werden, und bei dem mittels einer Empfangseinheit übermittelte Dokumente empfangen sowie mittels einer Druckeinheft ausgedruckt werden,
**dadurch gekennzeichnet, daß** vor dem Übertragen von Dokumenten benutzerindividuelle Handschriften eingegeben sowie in geeigneter Form abgespeichert werden und daß die Umwandlung der durch die Abtasteinheit abgetasteten Bildinformation in Codes mittels der OCR-Einheit auf Basis der abgespeicherten, benutzerindividuellen Schriftbilder erfolgt sowie ggf. korrigiert wird und daß die durch die OCR-Einheit umgewandelten und ggf. korrigierten Codes anschließend wieder durch die OCR-Einheit in eine Bildinformation umgewandelt und mittels der Druckeinheit ausgedruckt wird.

5. Verfahren nach Anspruch 4,
**dadurch gekennzeichnet, daß** die abgespeicherte benutzerindividuellen Schriftbildcodes mittels Magnet- oder Chipkarten aufrufbar sind.

6. Verfahren nach Anspruch 4 oder 5,
**dadurch gekennzeichnet, daß** die durch die OCR-Einheit auf Basis der benutzerindividuellen Schriftbildcodes erstellten und wieder in Bildinformationen rückumgewandelten Codes unmittelbar nach deren Erstellen mittels einer Anzeigeeinrichtung angezeigt werden.

## Claims

1. A fax apparatus for transmitting and receiving documents which in particular have at least in part manuscript components, including a scanning unit for scanning the image information of a document to be transmitted, an OCR-unit for converting the scanned image information into codes, a transmitting unit for transmitting the codes which are converted by the OCR-unit, a receiving unit for receiving transmitted documents and a printed unit for printing out documents, **characterised in that** there is provided a writing image input and storage unit for the input of user-individual writing images and for storage of the user-individual writing images in suitable form, that there is provided a call-up unit for user-individual call-up of a user-individual writing image in the writing image input and storage unit, that there is further provided an intermediate storage means which stores the converted codes which are stored by the OCR-unit on the basis of the stored user-individual writing image, that there is a data transmission connection between the OCR-unit and the printing unit so that the codes converted back into image information again by the OCR-unit, immediately after they have been produced and converted back, can be printed out by means of the printing unit, and that there is provided an erasing unit for erasing the codes stored in the intermediate storage means and a confirmation unit with which the codes stored in the intermediate storage means can be called up from the intermediate storage means for transmission by means of the transmitting unit.

2. A fax apparatus according to claim 1 **characterised in that** the call-up unit is formed by a card reading unit for reading magnetic or chip cards.

3. A fax apparatus according to claim 1 or claim 2 **characterised in that** there is provided a display device for displaying the codes which are processed by the comparison and correction unit and converted back into items of image information again by the OCR-unit, immediately after they are produced.

4. A method of transmitting documents which in particular have at feast in part manuscript components, wherein the document is scanned by means of a scanning unit and the scanned image information is converted into codes by means of an OCR-unit, wherein the codes converted by the OCR-unit are transmitted by means of a transmitting unit, and wherein documents transmitted are received by means of a receiving unit and printed out by means of a printing unit, **characterised in that** prior to the transmission of documents user-individual handwritings are inputted and stored in suitable form and that conversion of the image information scanned by the scanning unit into codes is effected by means of the OCR-unit on the basis of the stored user-individual writing images and possibly corrected and that the codes converted by the OCR-unit and possibly corrected are then converted into image information again by the OCR-unit and printed out by means of the printing unit.

5. A method according to claim 4 **characterised in that** the stored user-individual writing image codes can be called up by means of magnetic or chip cards.

6. A method according to claim 4 or claim 5 **characterised in that** the codes which are produced by the OCR-unit on the basis of the user-individual writing image codes and converted back into items of image information again are displayed by means of a display device, immediately after they are produced.

## Revendications

1. Télécopieur pour envoyer et recevoir des documents présentant au moins en partie des éléments manuscrits, comportant une unité d'échantillonnage pour échantillonner les informations d'image d'un document à transmettre, une unité de ROC (Reconnaissance Optique de Caractère), pour convertir en codes les informations d'image, une unité d'émission pour envoyer des codes convertis par l'unité de ROC, une unité de réception pour recevoir des documents transmis ainsi qu'une unité d'impression pour imprimer des documents, **caractérisé en ce qu'**une unité d'entrée et de mémorisation d'écritures est prévue pour entrer des écritures spécifiques à l'utilisateur ainsi que pour mémoriser les écritures spécifiques à l'utilisateur sous une forme appropriée, en ce qu'une unité d'appel est prévue pour appeler de façon spécifique à l'utilisateur une écriture spécifique à l'utilisateur dans l'unité d'entrée et de mémorisation d'écritures, en ce qu'il existe en outre une mémoire tampon qui mémorise les codes convertis et mémorisés par l'unité de ROC sur la base de l'écriture spécifique à l'utilisateur mémorisée, en ce qu'il existe une connexion de transmission de données entre l'unité de ROC et l'unité d'impression, de sorte que les codes reconvertis par l'unité de ROC en informations d'image peuvent être imprimés immédiatement après leur création et leur reconversion au moyen de l'unité d'impression, et en ce qu'une unité de suppression est prévue pour supprimer les codes mémorisés dans la mémoire tampon ainsi qu'une unité de validation par laquelle les codes mémorisés dans la mémoire tampon peuvent être appelés de la mémoire tampon au moyen de l'unité d'émission en vue d'une transmission.

2. Télécopieur selon la revendication 1, **caractérisé en ce que** l'unité d'appel est réalisée par une unité de lecture de cartes pour lire des cartes magnétiques ou à puce.

3. Télécopieur selon la revendication 1 ou 2, **caractérisé en ce qu'**un dispositif d'affichage est prévu pour afficher directement après leur création les codes traités par l'unité de comparaison et de correction et reconvertis par l'unité de ROC en informations d'image.

4. Procédé de transmission de documents présentant au moins en partie des éléments manuscrits au moyen de télécopieurs, dans lequel le document est échantillonné au moyen d'une unité d'échantillonnage et les informations d'image échantillonnées sont converties en codes au moyen d'une unité de ROC, dans lequel les codes convertis par l'unité de ROC sont envoyés au moyen d'une unité d'émission, et dans lequel des documents transmis sont reçus au moyen d'une unité de réception et imprimés au moyen d'une unité d'impression, **caractérisé en ce qu'**avant la transmission de documents, des écritures manuscrites spécifiques à l'utilisateur sont entrées et mémorisées sous forme appropriée, et en ce que la conversion en codes des informations d'image échantillonnées par l'unité d'échantillonnage est effectuée au moyen de l'unité de ROC sur la base des écritures spécifiques à l'utilisateur et mémorisées et est éventuellement corrigée, et en ce que les codes convertis par l'unité de ROC et éventuellement corrigés sont ensuite reconvertis par l'unité de ROC en informations d'image et imprimés au moyen de l'unité d'impression.

5. Procédé selon la revendication 4, **caractérisé en ce que** les codes d'écriture spécifiques à l'utilisateur et mémorisés peuvent être appelés au moyen de cartes magnétiques ou à puce.

6. Procédé selon la revendication 4 ou 5, **caractérisé en ce que** les codes créés par l'unité de ROC sur la base de codes d'écriture spécifiques à l'utilisateur et reconvertis en informations d'image sont affichés directement après leur création au moyen d'un dispositif d'affichage.
